# EUROPEAN PATENT SPECIFICATION

(11) **EP 0 578 385 B1**
(45) Date of publication and mention of the grant of the patent: **15.05.1996**
(21) Application number: 93304570.0
(22) Date of filing: 17.06.1993
(51) Int. Cl.: B23K 26/06

(54) **Laser perforation device**
Vorrichtung zum Perforieren mit einem Laser
Appareil de perforation au laser

(30) Priority: 08.07.1992 GB 9214469
(43) Date of publication of application: 12.01.1994
(73) Proprietor: BRITISH-AMERICAN TOBACCO COMPANY LIMITED, Staines, Middlesex TW18 1DY (GB)
(72) Inventor: Knight, Roderick Gordon Thomas, Bitterne, Southampton S02 5EH (GB)
(74) Representative: MacLean, Kenneth John Hamson

(56) References cited:
- EP-A- 0 384 121
- FR-A- 2 554 686
- PATENT ABSTRACTS OF JAPAN vol. 11, no. 210 (M-604)(2657) 8 July 1987 & JP-A-62 28 093 (MITSUBISHI ELECTRIC CORP.) 6 February 1987

## Description

The subject invention relates to laser perforation devices.

It is known in the tobacco industry to provide ventilation perforations in cigarettes by employing a laser perforation device. It is a common practice in such use of a laser perforation device to mount the device on a cigarette filter attachment machine. The device is positioned adjacent a path of double cigarette assemblies, each comprising two tobacco rods and an intermediate, double unit length filter rod, which is attached to the tobacco rods by a double width tipping wrapper. At the location of the laser perforation device the double cigarette assemblies are rotated about the longitudinal axes thereof. Pulses of laser light focused at the surface of the cigarettes produce circumferentially spaced ventilation perforations.

JP-A-62 28 093 discloses a device for laser beam welding wherein a single laser beam is split into two parallel laser beams perpendicular to the original beam. In this device of the two focussing means included therein only one is freely movable.

EP 0 384 121 discloses a cigarette perforating apparatus wherein a single laser beam is again split into two parallel laser beams which are perpendicular to the original laser beam. However, in this case neither of the focusing means is movable - therefore perforations can only be obtained at a fixed position on the cigarette.

FR 2 554 686 discloses a method of splitting a single laser beam using an acousto-optical beam deflector and a complicated arrangement of mirrors and semi-mirrors. Whilst this method allows for controlled positioning of the perforations on the cigarette, it is a very complicated device.

It is an object of the subject invention to provide an improved laser perforation device by the use of which it is possible to produce cigarette ventilation perforations at differing desired locations along the length of the cigarettes.

The subject invention provides a laser perforation device according to Claim 1.

Preferably, the direction of each of the two laser beams is perpendicular to the direction of the single laser beam, i.e. the beams are parallel.

Advantageously, laser beam splitting means is associated with and moves with the first focusing means, said beam splitting means being operable to direct a proportion of the single laser beam, preferably 50%, to the first focusing means, the remaining portion of the single laser beam being permitted to pass to the second focusing means. The beam splitting means is suitably a semi-mirror, the coating of which mirror being such as to cause partial reflection and to permit partial transmission therethrough of laser light.

The portion of the single laser beam which is permitted to pass to the second focusing means from the beam splitting means is directed to the second focusing means by beam directing means associated with and moving with the second focusing means. The beam directing means suitably takes the form of a mirror.

In order that the subject invention may be clearly understood and readily carried into effect, reference will now be made, by way of example, to the diagrammatic drawings hereof, in which:
Figure 1 shows a front elevation of a laser perforation device;
Figure 2 shows an end view of the device of Figure 1; and
Figure 3 shows a perspective view of elements of the device of Figure 1 and also shows a double cigarette assembly.

The laser perforation device, generally designated by the reference numeral 1, comprises a frame, generally designated by reference numeral 2, which frame consists of a mounting plate 3, three circular section rods, 4, 5 and 6 and an end plate 7. The rods 4-6 are rigidly connected to the mounting plate 3 (by means not shown). The end plate 7 is releasably secured to the distal ends of the rods 4-6 by means of nuts, 8, 9 and 10.

The mounting plate 3 comprises a spigot 11 which is receivable in a recess in the back plate (not shown) of a cigarette filter attachment machine (also not shown) to ensure accurate location of the frame 1 on the back plate, whereupon the mounting plate provides a datum location. Extending through the mounting plate 3 is an open ended bore 12.

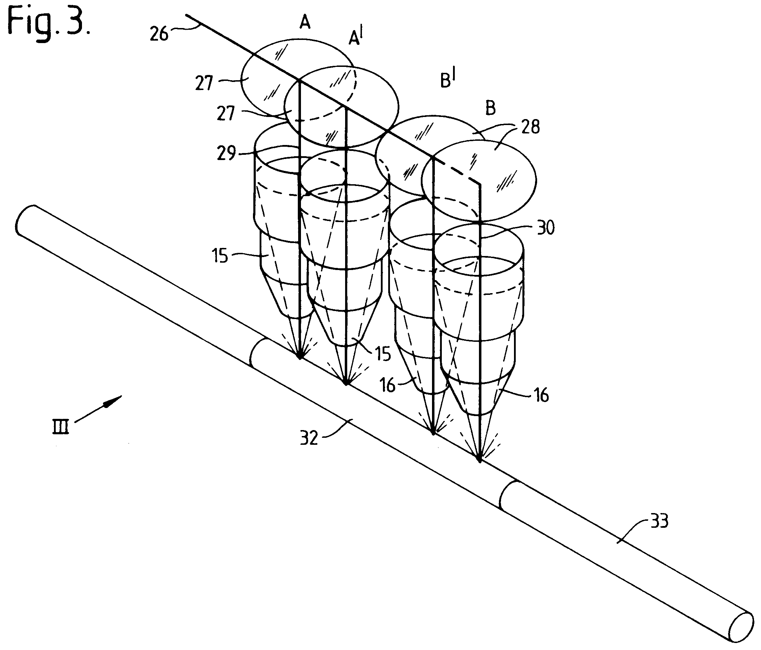

Mounted on the rods 4, 5 and 6 for sliding movement therealong are first and second housings 13 and 14, within which are respectively located first and second focusing means 15 and 16 (see Figure 3).

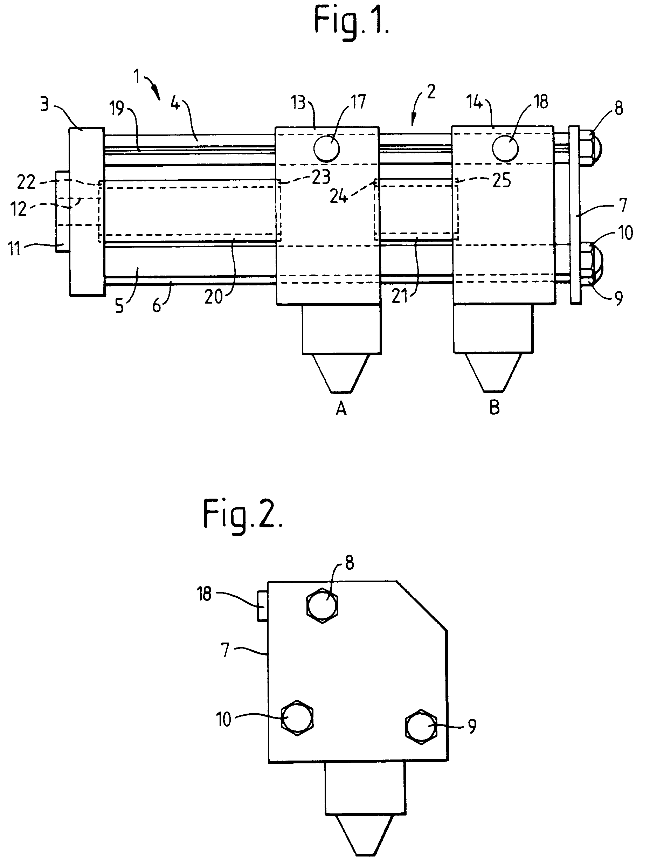

As shown in Figure 1, the housings 13, 14 are in respective positions designated A and B, which positions are equi-distant the mid-point transverse plane of the double cigarette assembly (33) shown in Figure 3. The housings 13, 14 are locked in position by means of locking screws 17 and 18, pointed ends (not shown) of which engage in a longitudinal V-section groove 19 of the rod 4.

In order to ensure that the housings 13, 14 are located accurately, in the sense of the distance between the housings and the equi-spacing thereof from the above mentioned transverse plane, use is made of spacer tubes 20 and 21. Spacer tube 20 is located at one end thereof in an annular groove 22 of the mounting plate 3, and at the other end thereof in an annular groove 23 of the housing 13. Similarly, the spacer tube 21 is located in annular grooves 24 and 25 of the housings 13 and 14 respectively.

When the device 1 is mounted on a cigarette filter attachment machine and is in use, a beam of laser light 26 (Figure 3) from a laser (not shown), a CO₂ laser for example, is directed, via the bore 12, towards the housings 13, 14. The laser beam enters the housing 13 via an opening (not shown) in the wall thereof and encounters a gold plated semi-mirror 27 (Figure 3) which is mounted within the housing 13. The semi-mirror 27, which is mounted at 45° to the direction of the laser beam 26 as viewing in the direction of arrow III, directs 50% of the laser light into the focusing means 15. The remaining 50% of the laser light passes through the semi-mirror 27 and then passes, via openings (not shown) in the walls of the housings 13,14, to a gold plated full mirror 28 which is mounted within the housing 14. The mirror 28, which has the same 45° orientation as that of the semi-mirror 27, serves to direct the laser light into the focusing means 16. There are thus provided two parallel laser beams 29 and 30. The beams 29, 30 are focused at points just below the tipping wrapper 32 and underlying plugwrap (not shown) of the double cigarette assembly 33.

The laser beam 26, and thus also the beams 29, 30, is electronically pulsed in synchronism with the speed at which the double cigarette assembly 33 is rotated about the longitudinal axis thereof by the cigarette filter attachment machine. There are thus produced two lines of circumferentially equi-spaced ventilation perforations which extend through the tipping wrapper 32 and the said underlying plugwrap. The two lines of perforations are, furthermore, accurately equi-spaced of the transverse midpoint plane of the assembly 33.

If it is required to produce two lines of perforations which are at the closer locations of assembly 33 associated with positions A' and B' of the housings 13 and 14 (Figure 3), nuts 8-10 and end plate 7 are removed so as to permit the removal from the frame 2 of the housings 13, 14 upon the screws 17, 18 being slackened. Upon reassembly of these items the spacer tubes 20, 21 are replaced by alternate spacer tubes, that replacing tube 20 being longer than tube 20 and that replacing tube 21 being shorter than tube 21. There thereby results a closer spacing of the housings 13, 14, but the housings are still accurately located equi-distant the said transverse plane.

Suitably there will be associated with the laser perforation apparatus a graduated set of pairs of spacer tubes, whereby the spacing between the housings 13, 14 (and of the respective focusing means therein) can be set at any of a number of values within an overall range of values, the individual values being, for example, at 0.5mm intervals.

## Claims

1. A laser perforation device (1) being operable to provide two laser beams (29,30) from a single laser beam (26), and said device comprising first and second focusing means (15 and 16) operable to focus respective laser beams of said two laser beams (29 and 30) said first and second focusing means (15 and 16) being relatively movable so as to vary the spacing of said two laser beams (29 and 30), characterised by first and second spacer means, said first focusing means (15) being located at a first distance from a datum location (3) by means of said first spacer means (20, 21) and said second focusing means (16) being located at a first distance from said first focusing means (15) by said first spacer means (20, 21), such that said laser beams (29 and 30) are equi-spaced about a reference plane, said first spacer means (20,21) being replaceable by said second spacer means by which means said first focusing means (15) can be located at a second distance from said datum location (3) and said second focusing means (16) can be located at a second distance from said first focusing means (15), said laser beams (29 and 30) remaining equi-spaced about said reference plane.

## Patentansprüche

1. Vorrichtung (1) zum Perforieren mit einem Laser, die so betrieben werden kann, daß sie zwei Laserstrahlen (29, 30) aus einem einzelnen Laserstrahl (26) zur Verfügung stellt, und wobei die Vorrichtung erste und zweite Fokussiereinrichtungen (15 und 16) aufweist, die so betrieben werden können, daß sie jeweilige Laserstrahlen der beiden Laserstrahlen (29 und 30) fokussieren, wobei die ersten und zweiten Fokussiereinrichtungen (15 und 16) relativ bewegbar sind, so daß sie den Abstand der beiden Laserstrahlen (29 und 30) verändern,
**gekennzeichnet durch**
erste und zweite Abstandseinrichtungen, wobei die erste Fokussiereinrichtung (15) mittels der ersten Abstandseinrichtung (20, 21) in einem ersten Abstand von einer Basisstelle (3) angeordnet ist und die zweite Fokussiereinrichtung (16) durch die erste Abstandseinrichtung (20, 21) in einem ersten Abstand von der ersten Fokussiereinrichtung (15) angeordnet ist, so daß die Laserstrahlen (29 und 30) in gleichem Abstand um eine Referenzebene angeordnet sind, wobei die erste Abstandseinrichtung (20, 21) durch die zweite Abstandseinrichtung ersetzbar ist, wodurch die erste Fokussiereinrichtung (15) in einem zweiten Abstand von der Basisstelle (3) angeordnet werden kann und die zweite Fokussiereinrichtung (16) in einem zweiten Abstand von der ersten Fokussiereinrichtung (15) angeordnet werden kann, wobei die Laserstrahlen (29 und 30) in einem gleichen Abstand um die Referenzebene verbleiben.

## Revendications

1. Dispositif de perforation au laser (1) servant à produire deux faisceaux lasers (29, 30) à partir d'un unique faisceau laser (26), et ledit dispositif comprenant des premier et deuxième moyens de concentration (15 et 16) servant à concentrer des faisceaux lasers respectifs desdits deux faisceaux lasers (29 et 30), lesdits premier et deuxième moyens de concentration (15 et 16) étant déplaçables l'un par rapport à l'autre de manière à faire varier l'espacement desdits deux faisceaux lasers (29 et 30), caractérisé par des premier et deuxième moyens d'espacement, ledit premier moyen de concentration (15) étant situe, à une première distance par rapport à un emplacement de référence au moyen dudit premier moyen d'espacement (20, 21) et ledit deuxième moyen de concentration (16) étant situé à une première distance depuis ledit premier moyen de concentration (15), par ledit premier moyen d'espacement (20, 21), de manière que lesdits faisceaux lasers (29 et 30) soient espacés de la même distance autour d'un plan de référence, ledit premier moyen d'espacement (20, 21) étant remplaçable par ledit deuxième moyen d'espacement, moyen permettant que ledit premier moyen de concentration (15) puisse être situé à une deuxième distance par rapport audit emplacement de référence (3) et ledit deuxième moyen de concentration (16) peut être situé à une deuxième distance par rapport audit premier moyen de concentration (15), lesdits faisceaux lasers (29 et 30) étant restant espacés de la même distance autour dudit plan de référence.
